# FASCICULE DE BREVET EUROPEEN

(11) **EP 2 625 027 B1**
(45) Date de publication et mention de la délivrance du brevet: **23.07.2014**
(21) Numéro de dépôt: 11779787.8
(22) Date de dépôt: 04.10.2011
(51) Int. Cl.: B29C 70/34, B29C 70/38, B29D 99/00, B29C 33/30, B29C 70/46, B29L 31/00

(54) **PROCEDE DE FABRICATION DE RAIDISSEURS EN MATERIAU COMPOSITE**
VERFAHREN ZUR HERSTELLUNG VON VERSTEIFUNGEN AUS EINEM VERBUNDWERKSTOFF
METHOD FOR MANUFACTURING STIFFENERS MADE OF A COMPOSITE MATERIAL

(30) Priorité: 06.10.2010 FR 1058101
(43) Date de publication de la demande: 14.08.2013
(73) Titulaire: Coriolis Composites, 69001 Lyon (FR)
(72) Inventeur: HAMLYN, Alexander, F-56270 Ploemeur (FR)
(86) Numéro de dépôt international: PCT/FR2011/052306
(87) Numéro de publication internationale: WO 2012/045969

(56) Documents cités:
- EP-A1- 1 342 556
- WO-A2-2006/119002
- WO-A2-2009/112694
- FR-A1- 2 928 294
- US-A1- 2008 115 555

## Description

La présente invention concerne un procédé fabrication d'une pièce de renfort allongée, tel qu'un raidisseur, formée de plusieurs plis de matériau composite.

Les structures de type panneaux en matériaux composites sont généralement raidies ou rigidifiées soit grâce à une structure dite « sandwich » soit grâce à des raidisseurs rapportés sur une peau dite monolithique, soit une combinaison des deux. Dans le cas de la rigidification d'une peau monolithique, la quantité de raidisseurs à rapporter est importante.

Ces raidisseurs s'étendent selon une ligne directrice longitudinale et ont une forme géométrique transversale, appelée section transversale, comprenant au moins deux portions non coplanaires, par exemple une section transversale en oméga ou en delta.

Chaque raidisseur est formé de plusieurs plis superposés, chaque pli étant formé par drapage sur un moule d'une ou plusieurs bandes jointives, chacune formée d'une ou plusieurs fibres plates, de type rubans, imprégnées de résine non durcie ou crue, notamment des fibres de carbone imprégnées d'une résine thermodurcissable ou thermoplastique. Après application de plusieurs plis superposés, la pièce résultante est durcie ou polymérisée par passage dans un four autoclave.

Dans le cas de panneaux à double courbure et/ou de panneaux avec des épaisseurs variables, notamment dans le cas de peaux dans le secteur aéronautique, par exemple une peau de fuselage d'avion ou de voilure d'avion, chaque raidisseur peut avoir une forme géométrique spécifique et variable le long de sa ligne directrice.

Le document brevet US 7 249 943 décrit notamment un procédé de fabrication de raidisseurs par drapage automatique de bandes au moyen de rouleaux, chaque pli étant formé d'une seule bande formée d'une large fibre plate. Ce procédé permet de fabriquer uniquement des raidisseurs de section transversale quasi-constante et suivant une ligne directrice à courbure constante ou quasi-constante, c'est à dire suivant une droite ou suivant une portion de cercle. Ce procédé nécessite un système de compactage par rouleaux qui est spécifique à chaque section transversale de raidisseur. En outre, les taux de chutes s'avèrent importants dans le cas de l'utilisation de telles bandes larges.

Une autre technique de fabrication de raidisseur consiste à réaliser une pièce plane par drapage de plusieurs plis sur un moule plan, puis à effectuer une ou plusieurs opérations de pliage et/ou de cintrage de la pièce plane avant durcissement. Pour notamment limiter le taux de chute, le drapage peut être effectué au moyen d'une tête de placement de fibres permettant d'appliquer, via un rouleau de compactage, une bande large formée de plusieurs fibres plates de type ruban. Comme précédemment, ce procédé permet uniquement la fabrication de raidisseurs de section transversale constante et suivant une ligne directrice à courbure constante. L'opération de pliage ou cintrage est relativement complexe à mettre en oeuvre, et conduit à la formation de bourrelets au niveau des plis intérieurs qui affecte les propriétés de résistance de la pièce finale.

Le document brevet FR 2928294 décrit un procédé de fabrication d'une pièce de renfort allongée de matériau composite, selon le préambule de la revendication 1.

Le but de la présente invention est de proposer un procédé de fabrication de raidisseurs visant à pallier au moins l'un des inconvénients précités, qui permet de réaliser un raidisseur avec des variations d'épaisseurs le long de sa ligne directrice et/ou avec des courbures doubles, de maîtriser l'orientation de chaque fibre notamment suivant des trajectoires courbes, de minimiser le taux de chute, et/ou d'être automatisable.

A cet effet la présente invention a pour objet un procédé de fabrication d'une pièce de renfort allongée, selon la revendication 1.

Selon l'invention, le raidisseur est obtenu par drapage et formage d'ensembles de plis, puis en réalisant un compactage final des ensembles de plis empilés. Chaque ensemble est formé d'au moins deux plis complémentaires, de sorte que ledit ensemble garde une certaine cohésion pour permettre son déplacement. Les plis complémentaires sont soit drapés dans des directions complémentaires, les bandes des deux plis formant un angle non nul entre elles, soit drapés en quinconce. Dans ce dernier cas, les plis sont parallèles entre eux et sont décalés l'un par rapport à l'autre de sorte que chaque fibre d'un pli supérieur recouvre deux fibres adjacentes du pli inférieur. Les angles entre les plis peuvent varier d'un ensemble de plis à l'autre. Lors du compactage final des ensembles préformés, les ensembles préformés peuvent se déplacer les uns par rapport aux autres, ce qui permet, de maîtriser l'orientation des fibres, notamment suivant des trajectoires courbes. Un tel procédé est automatisable, permet de réaliser un raidisseur avec une section transversale variable, qui varie le long de sa ligne directrice longitudinale, avec des variations d'épaisseur le long de sa ligne directrice longitudinale et/ou avec des courbures doubles.

Selon un mode de réalisation, l'étape a) comprend le drapage de plis par une tête de placement de fibres comprenant un rouleau de compactage, ladite tête de placement de fibres étant apte à appliquer une bande formée de plusieurs fibres plates, de type rubans, imprégnées de résine, ou sèches. Lors de l'application ou dépose des fibres par le rouleau de compactage, ce dernier maintient une pression continue sur la surface d'application du moule pour évacuer progressivement l'air emprisonné entre les bandes de fibres déposées. Cette opération de compactage lors de la dépose permet d'obtenir une pièce avant opération de durcissement dont les dimensions correspondent sensiblement à celles de la pièce finale obtenue après durcissement. Dans le cas de fibres dites sèches, les fibres comprennent, de manière connue, une quantité de résine suffisante pour assurer une adhérence entre les plis. A l'issue de l'étape e) de compactage, la pièce sera imprégnée de résine par injection ou infusion, puis la pièce sera soumise à une opération de durcissement.

Selon un mode de réalisation, pour la fabrication d'un ensemble préfonné, l'étape a) comprend le drapage des plis, de préférence au moyen d'une tête de placement de fibres, sensiblement à plat sur un outil de drapage qui constitue un outil de formage femelle, les plis s'étendant au dessus et de part et d'autre de la gorge longitudinale.

Selon un autre mode de réalisation, pour la fabrication d'un ensemble préformé, l'étape a) comprend le drapage d'un ensemble de plis sur un outil de drapage ayant une surface correspondant sensiblement à la ligne directrice longitudinale de la pièce de renfort à réaliser, et le positionnement dudit ensemble de plis sur un outil de formage mâle ou un outil de formage femelle, de préférence sur un outil de formage mâle.

A l'étape a), les plis peuvent être drapés sur un bossage longitudinal, dit aplati ou à section aplatie, de l'outil de drapage, de préférence au moyen d'une tête de placement de fibres, ledit bossage longitudinal aplati ayant une géométrie ou forme transversale correspondant à une section aplatie ou écrasée de la section transversale de la pièce de renfort à réaliser, cet aplatissement correspondant à la limite de forme faisable par exemple au moyen d'une tête de placement de fibres, tout en étant au plus proche de la section transversale définitive de la pièce de renfort à réaliser pour limiter le déplacement des fibres lors du formage à l'étape b). En variante, à l'étape a), les plis peuvent être drapés dans un renfoncement ou gorge longitudinale, dite aplatie ou à section aplatie, de l'outil de drapage, ladite gorge longitudinale aplatie ayant une forme transversale correspondant à une section aplatie de la section transversale de la pièce de renfort à réaliser, cet aplatissement correspondant à la limite de forme faisable par exemple au moyen d'une tête de placement de fibres, tout en étant au plus proche de la section transversale définitive de la pièce de renfort à réaliser pour limiter le déplacement des fibres lors du formage à l'étape b). Le degré d'aplatissement de ces sections aplaties est défini de sorte que le drapage puisse être réalisé automatiquement au moyen d'une tête de placement de fibres, en fonction de la taille et du degré de déformation du rouleau de compactage, l'ensemble de plis ainsi formé est cintré, ce qui facilite son positionnement sur un outil de formage, en particulier l'outil de formage mâle, et réduit l'ampleur du formage à l'étape b).

Selon un mode de réalisation, à l'étape a), les plis d'un ensemble de plis sont drapés sur un outil de drapage puis l'ensemble de plis est transféré sur l'outil de formage mâle ou l'outil de formage femelle, l'outil de drapage, l'outil de formage mâle et l'outil de formage femelle étant trois outils distincts.

Selon un autre mode de réalisation, l'outil de drapage est formé
- de l'outil de formage mâle équipé d'au moins une cale longitudinale amovible, le bossage longitudinal formant avec ladite cale ledit bossage longitudinal aplati, ou
- de l'outil de formage femelle équipé d'au moins une cale longitudinale amovible, la gorge longitudinale formant avec ladite cale ladite gorge longitudinale aplatie,
l'étape a) comprenant le drapage des plis d'un ensemble de plis, de préférence au moyen d'une tête de placement de fibres, sur l'outil de formage mâle équipé d'au moins une cale ou sur l'outil de formage femelle équipé d'au moins une cale, puis le retrait de ladite cale.

Selon un autre mode de réalisation, à l'étape a), les plis sont drapés sensiblement à plat sur un outil de drapage, sans bossage ni gorge, l'outil de drapage ayant simplement une surface correspondant à la ligne longitudinale directrice de la pièce de renfort à réaliser, l'ensemble de plis étant ensuite transféré sur l'outil de formage mâle ou l'outil de formage femelle, de préférence sur l'outil de formage mâle.

Selon un mode de réalisation, à l'étape a), l'ensemble de plis est transféré sur l'outil de formage mâle ou l'outil de formage femelle via l'outil de drapage. Dans le cas d'un drapage sur un outil de drapage avec un bossage à section aplatie ou sans bossage ni gorge à section aplatie, l'ensemble de plis peut être transféré sur l'outil de formage mâle, via un outil de transfert supplémentaire.

Selon un mode de réalisation, l'étape c) comprend le positionnement de l'ensemble préformé via l'outil de formage mâle sur l'outil de moulage final.

Selon un mode de réalisation, l'étape e) de compactage est réalisée sous vide au moyen d'un sac à vide et/ou est réalisée au moyen d'une contre-forme.

Selon un mode de réalisation, le procédé comprend en outre une étape f) de durcissement de la pièce de renfort à l'état cru, par passage dans un four, de préférence un four autoclave. Pour ce faire, la pièce de renfort à l'état cru est positionnée au préalable sur un outil de cuisson ou un outil de contre-forme.

Selon un mode de réalisation, l'étape f) est précédée d'une étape de détourage de la pièce de renfort à l'état cru, réalisée de préférence lorsqu'elle est positionnée sur l'outil de moulage final.

Selon un mode de réalisation, ladite pièce de renfort à réaliser présente au moins une double courbure, l'outil de drapage ayant une surface d'application correspondant à ladite double courbure.

Selon un mode de réalisation, ladite pièce à réaliser est un raidisseur de section transversale en oméga, en delta, en C, en U, en V, en W, en S, en Z, ou en L, ladite section transversale étant sensiblement constante ou variable le long de sa ligne longitudinale directrice.

L'invention sera mieux comprise, et d'autres buts, détails, caractéristiques et avantages apparaîtront plus clairement au cours de la description explicative détaillée qui va suivre de modes de réalisation particuliers actuellement préférés de l'invention, en référence aux dessins schématiques annexés, sur lesquels :
- les figures 1a et 1b sont respectivement une vue en perspective et une vue de côté d'un raidisseur de section transversale en delta ;
- les figures 2a et 2b sont des vues en perspective d'une étape de drapage au moyen d'une tête de placement de fibres d'un ensemble de plis sur un outil de drapage et de formage femelle, selon un premier mode de réalisation du procédé de fabrication selon l'invention pour réaliser un raidisseur tel qu'illustré aux figures 1a et 1b ;
- la figure 3 est une vue schématique partielle agrandie de dessus de l'outil de drapage et de formage femelle lors de l'étape de drapage, illustrant les directions des plis ;
- les figures 4 à 8 sont différentes vues de côté de différents outils, illustrant différentes étapes du procédé de réalisation selon le premier mode de réalisation : le formage d'un ensemble de plis entre l'outil de formage mâle et de l'outil de drapage et de formage femelle ; le transfert de l'ensemble préformé sur un outil de moulage final, le positionnement de plusieurs ensembles de plis préformés sur l'outil de moulage final, et le compactage des ensembles de plis sur ledit outil de moulage final pour obtenir un raidisseur à l'état cru ;
- les figures 9 et 10 sont des vues en perspective du raidisseur à l'état cru sur l'outil de moulage final lors de l'opération de détourage et à l'issue de cette opération de détourage ;
- les figures 11a et 11b sont une vue en perspective et une vue de côté d'une peau en matériau composite munie d'un raidisseur de section transversale en oméga ;
- les figures 12a, 12b sont des vues respectivement en perspective et de côté d'un outil de drapage pour la mise en oeuvre d'un procédé selon un deuxième mode de réalisation de l'invention, pour réaliser un raidisseur tel qu'illustré à la figure 11b;
- la figure 12c est une vue schématique partielle agrandie de dessus de l'outil de drapage des figures 12a et 12b lors de l'étape de drapage, illustrant la direction des plis ;
- la figure 12d est une vue schématique analogue à celle de la figure 12c, illustrant la direction des plis selon une variante de réalisation ;
- les figures 13 à 18a et 18b sont différentes vues de côté de différents outils, illustrant différentes étapes du procédé de réalisation selon le deuxième mode de réalisation : le transfert de l'ensemble de plis sur un outil de fonnage mâle, le formage de l'ensemble de plis entre l'outil de formage mâle et de l'outil de drapage femelle ; le transfert de l'ensemble préformé sur un outil de moulage final ;
- les figures 19a, et 19b sont des vues, respectivement en perspective et de côté, d'un outil de drapage pour la mise en oeuvre d'un procédé selon un troisième mode de réalisation de l'invention, pour réaliser un raidisseur tel qu'illustré à la figure 11b ;
- les figures 20 et 21 sont des vues de côté de différents outils, illustrant des étapes du procédé de réalisation selon le troisième mode de réalisation : le transfert de l'ensemble de plis sur un outil de formage mâle, et le formage de l'ensemble de plis entre l'outil de formage mâle et de l'outil de drapage femelle ;
- les figures 22a et 22b sont des vues, respectivement en perspective et de côté, d'un outil de drapage pour la mise en oeuvre d'un procédé selon un quatrième mode de réalisation de l'invention, pour réaliser un raidisseur tel qu'illustré à la figure 11b ;
- la figure 23 est une vue de côté de l'outil de drapage et l'outil de formage mâle illustrant l'étape de transfert du procédé de réalisation selon le quatrième mode de réalisation pour transférer l'ensemble de plis sur l'outil de formage mâle ;
- les figures 24a à 24f illustrent différents exemples de sections transversales de raidisseurs qui peuvent être obtenus selon le procédé selon l'invention ;
- la figure 25 est une vue de côté d'un outil de formage mâle équipé de cales pour former un outil de drapage, servant à la mise en oeuvre d'un procédé selon un cinquième mode de réalisation de l'invention, pour réaliser un raidisseur tel qu'illustré à la figure 11b ; et
- les figures 26 et 27 sont des vues de côté de l'outil de formage mâle de la figure 25 après drapage des plis d'un ensemble de plis, respectivement avec les cales et après retrait des cales.

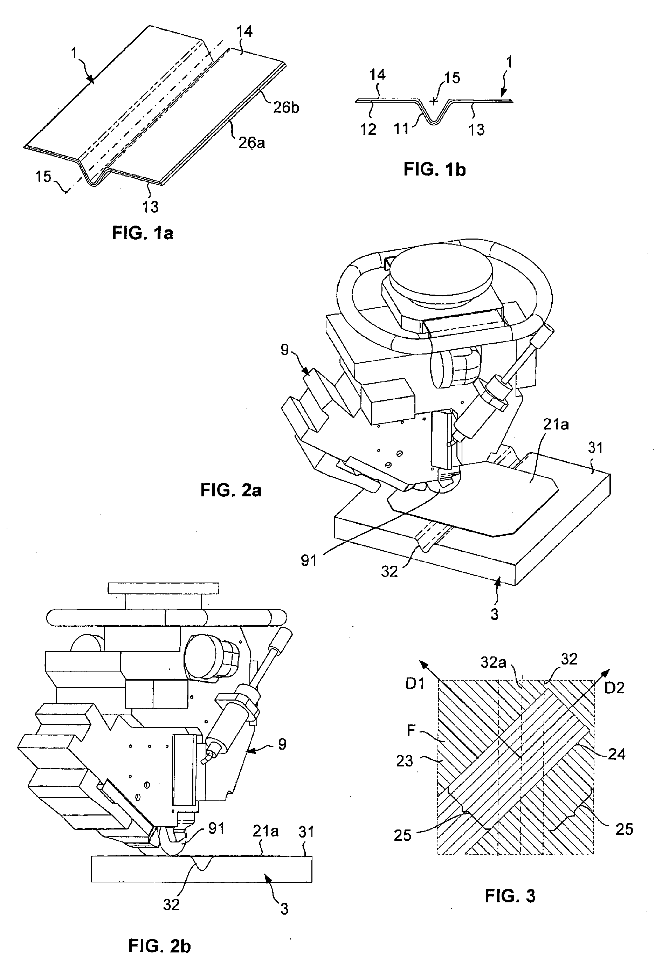

Les figures 2a à 10 illustrent les étapes d'un procédé de fabrication du raidisseur 1 en matériau composite illustré aux figures 1a et 1b. Le raidisseur 1 a une section transversale dite en delta ou en chapeau, le raidisseur présentant en section transversale une paire de portions 11 centrales disposées en V, reliées entres elles à des premières extrémités selon un angle défini, et une paire de portions 12 latérales, chaque portion latérale s'étendant depuis la deuxième extrémité d'une portion 11 centrale. Le raidisseur présente une surface 13 extérieure convexe et une surface 14 intérieure concave. Le raidisseur ne présente pas de courbure, sa ligne 15 directrice étant sensiblement rectiligne.

Le raidisseur est obtenu par drapage et formage d'ensembles de plis, les ensembles préformés étant placés sur un outil de moulage final pour la réalisation d'un compactage final des ensembles préformés.

En référence aux figures 2a et 2b, un ensemble 21 a de deux plis est drapé sur la surface 31 d'application d'un outil 3 de drapage, au moyen d'une tête 9 de placement de fibres. La tête de placement de fibres, connue en soi, comprend des moyens de guidage de fibres et un rouleau de compactage 91. Les moyens de guidage guident les fibres entrant dans la tête vers le rouleau de compactage sous la forme d'une bande de fibres pré-imprégnées de résine, les fibres de la bande étant disposées côte à côte de manière sensiblement jointives. Par déplacement de la tête, au moyen d'un système de déplacement approprié, tel qu'un bras poly-articulé, du type robot six axes, le rouleau de compactage est amené en contact avec la surface 31 d'application de l'outil de drapage pour appliquer la bande formée de plusieurs fibres. La tête est par exemple une tête du type décrit dans le document brevet FR 2 913 365.

L'outil 3 de drapage présente une surface 31 d'application correspondant à la surface 13 extérieure du raidisseur 1 à réaliser. L'outil de drapage présente ainsi une surface sensiblement plane munie d'une gorge 32 longitudinale dont la géométrie ou forme transversale correspond sensiblement à la section transversale du raidisseur à réaliser. L'outil de drapage avec sa gorge longitudinale sert également d'outil de formage femelle, pour l'opération de formage suivante, cet outil 3 de drapage étant également appelé outil de drapage et de formage femelle.

Un ensemble 21a d'au moins deux plis 23, 24 est réalisé dans des directions complémentaires sur l'outil de drapage. Chaque pli est réalisé par application de plusieurs bandes 25 de fibres plates via la tête de déplacement de fibres, les bandes étant disposées de manière sensiblement jointives et s'étendent au dessus et de part et d'autre de la gorge. Lors du drapage, le rouleau passe au-dessus de la gorge. Les paramètres de drapage sont réglés pour limiter l'enfoncement des fibres dans la gorge : pression de compactage réduite, rouleau de largeur supérieure à celle de la gorge, rouleau relativement dur. A titre d'exemple, tel qu'illustré à la figure 3, la tête permet l'application de bande 25 de huit fibres F. Les fibres du premier pli 23 sont disposées dans une direction D1 à -45° de la ligne 32a directrice de la gorge, celles du deuxième pli 24 sont disposées dans une direction D2 à +45° de la ligne directrice.

Lors du drapage, .les portions de plis de part et d'autre de la gorge 32 sont compactées par le rouleau de compactage, garantissant ainsi une liaison suffisante entre les plis. Ces plis de directions complémentaires permettent d'obtenir un ensemble présentant une cohésion suffisante pour être manipulé.

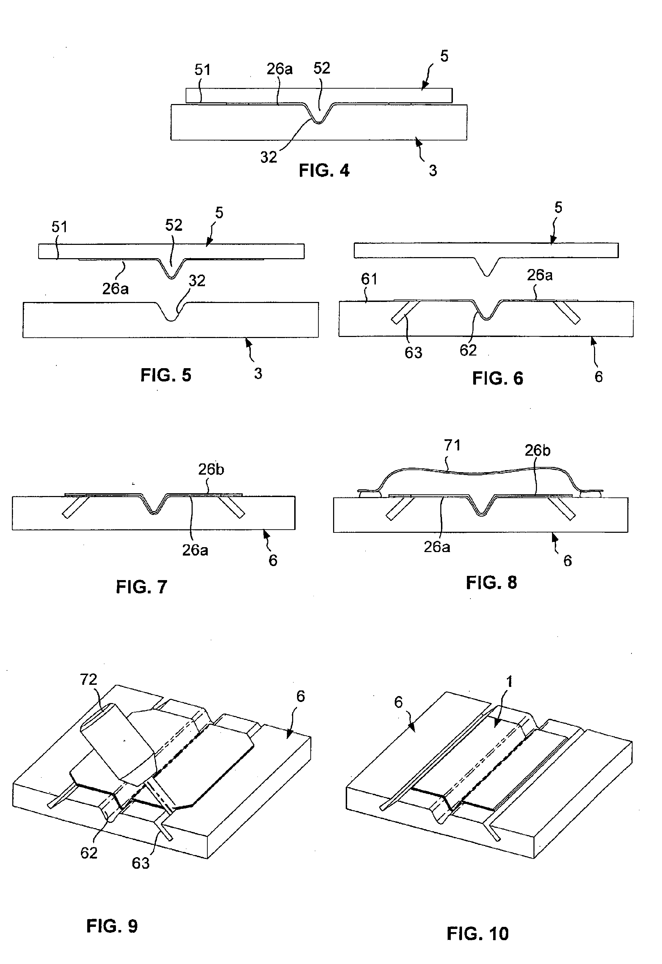

Une fois qu'au moins deux plis sont drapés, un outil 5 de formage mâle, appelé également matrice mâle ou poinçon, est appliqué manuellement, ou automatiquement avec le robot de drapage servant au déplacement de la tête, ou avec un autre système de déplacement, sur l'outil 3 de drapage et de formage femelle, tel qu'illustré à la figure 4. Cet outil de formage mâle présente une surface 51 correspondant à la forme de la surface 14 intérieure du raidisseur 1 à réaliser. Cette surface 51 présente un bossage 52 longitudinal de forme complémentaire de celle de la gorge, sa forme transversale correspondant sensiblement à la section transversale du raidisseur à réaliser. Ainsi, les plis 23, 24 de l'ensemble 21a sont préformés entre les deux outils quasiment à la forme définitive du raidisseur, en un ensemble 26a dit préformé, appelé également préforme. Le jeu ou entrefer entre les deux outils 3, 5 correspond à l'épaisseur d'un raidisseur fini, c'est à dire avec plusieurs ensembles de plis. Ce jeu ou entrefer peut si besoin être comblé par un revêtement souple et non adhésif fixé sur l'outil de formage mâle. Lors de ce formage, les deux plis sont compactés entre les deux outils 3, 5.

Grâce à un système de température et/ou de vide (non représenté) équipant l'outil de formage mâle, l'ensemble 26a préformé est décollé de l'outil de drapage et de formage femelle et reste sur l'outil de formage mâle, tel qu'illustré à la figure 5. L'outil de formage mâle transfert l'ensemble 26a préformé de façon automatique ou manuelle sur un outil de 6 moulage définitif, tel qu'illustré à la figure 6. Cet outil de moulage définitif présente une surface 61 dont la forme correspond à la surface 13 extérieure au raidisseur 1 à réaliser, ladite surface présentant une gorge 62 longitudinale correspondant sensiblement à celle 32 de l'outil 3 de drapage. Cet outil de moulage définitif possède des rainures 63 longitudinales de part et d'autre de la gorge pour servir d'outil de détourage, tel que décrit ci-après.

Des ensembles préformés sont fabriqués selon le procédé décrit ci-dessus, et les différents ensembles de plis composant la totalité de l'empilement de plis du raidisseur 1 à réaliser sont déposés sur cet outil de moulage. Dans ce mode de réalisation, le raidisseur est formé uniquement deux ensembles 26a, 26b préformés, tel qu'illustré à la figure 7, chaque ensemble étant formé de deux plis. Bien entendu, le raidisseur final peut être formé d'un nombre de plis plus important, par exemple compris entre 15 et 30, chaque ensemble préformé comprenant de 2 à 5 plis par exemple.

Les ensembles de plis disposés sur l'outil de moulage final sont ensuite soumis à un compactage. Ce compactage est par exemple réalisé sous vide, et en chauffant, par exemple au moyen d'un sac à vide 71, tel qu'illustré à la figure 8.

Lors de ce compactage, les ensembles préformés peuvent se déplacer les uns par rapport aux autres, le déplacement les plis d'un même ensemble étant sensiblement nul. Cette opération de compactage permet d'obtenir une pièce avant opération de durcissement dont les dimensions correspondent sensiblement à celles de la pièce finale obtenue après durcissement.

Une fois que tous les plis ont été préformés au plus près de la cote finie du raidisseur, un détourage du raidisseur cru résultant est réalisé par exemple avec un contre-outil 72 de coupe s'étendant dans les rainures, tel qu'un couteau ultra-son, tel qu'illustré à la figure 9.

Le raidisseur cru détouré illustré à la figure 10, peut être transféré dans un outil de cuisson ou un outil de contre-forme communément appelé « caul plate », pour être placé dans un four autoclave afin d'effectuer une opération de durcissement par polymérisation et/ou réticulation sous pression du raidisseur. Le raidisseur cru peut éventuellement être apposé à une peau en matériau composite, également à l'état cru, le raidisseur et la peau étant durcis simultanément par passage en four autoclave.

Selon une variante de réalisation, l'outil de moulage définitif comprend à la place de la gorge précitée, un bossage longitudinal de forme complémentaire sur lequel sont disposés les ensembles de plis.

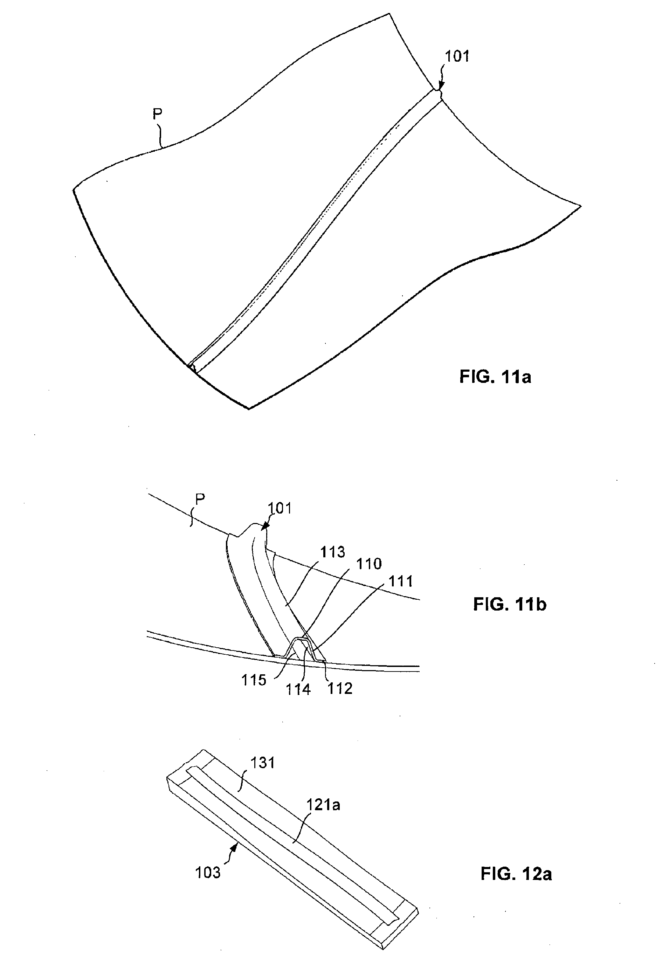

Les figures 11a et 11b illustrent une peau P en matériau composite à double courbure équipé d'un raidisseur 101 de section transversale en oméga.

Le raidisseur 101 présente en section transversale une portion centrale 110, une paire de portions 111 latérale, une portion latérale s'étendant depuis chaque extrémité de la portion centrale selon un angle défini, et une paire de portions 112 d'extrémité, chaque portion d'extrémité, appelée également semelle, s'étendant depuis la deuxième extrémité d'une portion latérale 111 centrale selon un angle défini. Le raidisseur présente une surface 113 extérieure convexe et une surface 114 intérieure concave. La section transversale du raidisseur varie le long de sa ligne 115 longitudinale directrice. Le raidisseur présente une double courbure correspondant à la double courbure de la peau, sa ligne 115 directrice étant courbée dans deux directions différentes, de sorte que le raidisseur puisse être fixé à plat par ses portions d'extrémités sur la surface interne de la peau.

Les figures 12a à 18c illustrent les étapes d'un procédé de fabrication du raidisseur 101 des figures 11a et 11b.

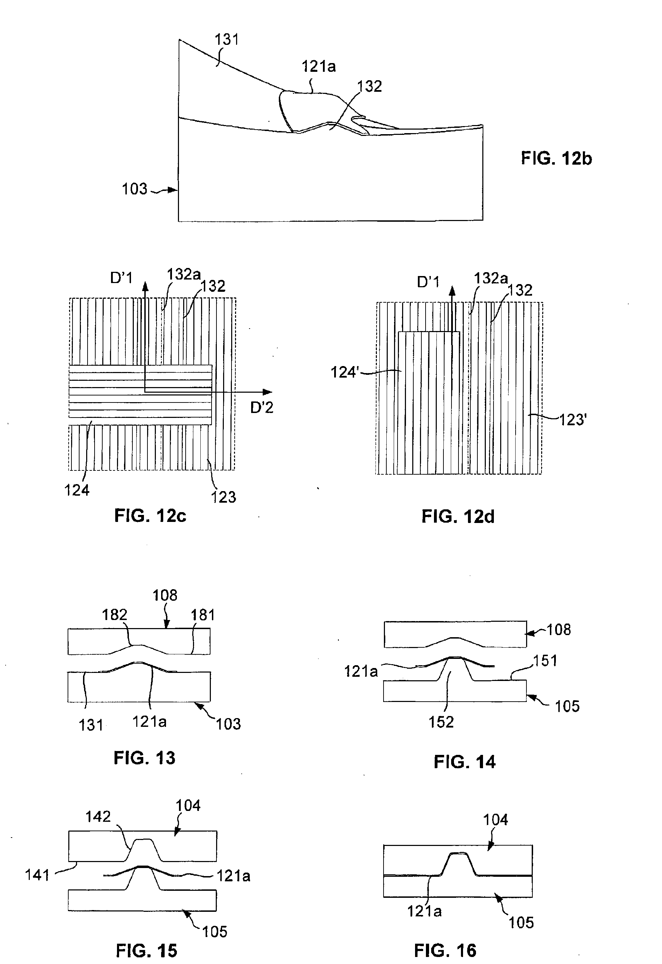

En référence aux figures 12a et 12b, un ensemble 121 a de deux plis est drapé sur la surface 131 d'application d'un outil 103 de drapage qui correspond à la surface interne de la peau. La surface d'application présente les mêmes courbures que la surface interne de la peau. La surface d'application est en outre munie d'un bossage 132 longitudinal s'étendant longitudinalement selon une ligne directrice correspondant à la ligne directrice longitudinale du raidisseur à réaliser et ayant une forme transversale correspondant à une section aplatie ou écrasée de la section transversale du raidisseur à réaliser.

Les plis sont drapés au moyen d'une tête de déplacement de fibres sur le bossage et de part et d'autre de celui-ci. En référence à la figure 12c, les deux plis sont drapés dans des directions complémentaires sur l'outil de drapage, les fibres du premier pli 123 sont disposées dans une direction D'1 à 0° de la ligne 132a directrice du bossage, celles du deuxième pli 124 sont disposées dans une direction D'2 à 90° de la ligne directrice. Selon une variante de réalisation, en référence à la figure 12d, les deux plis 123', 124' complémentaires sont disposés en quinconce. Les deux plis sont drapés dans une même direction D'1, par exemple à 0° de la ligne 132a directrice du bossage, les fibres du second pli 124' étant décalés par rapport à ceux du premier pli 123' de sorte que chaque fibre du second pli soit disposée à cheval sur deux fibres adjacentes du premier pli 123'.

En référence aux figures 13 et 14, un outil de transfert 108 présentant une surface 181, de forme complémentaire de celle de la surface de l'outil de drapage, avec un renfoncement 182, et équipé d'un système de vide, est appliqué sur l'outil 103 de drapage pour décoller l'ensemble 121a de plis et le maintenir sur sa surface 181 afin de le transférer sur un outil 105 de formage mâle. Cet outil de formage mâle présente une surface 151 correspondant à la forme de la surface 114 intérieure du raidisseur 101 à réaliser. Cette surface 151 présente un bossage 152 longitudinal dont la forme transversale correspondant sensiblement à la section transversale du raidisseur à réaliser. La section écrasée de l'ensemble 121a permet de centrer transversalement ledit ensemble sur le bossage. Des moyens de centrage longitudinal de l'outil de transfert, notamment un plot, coopérant avec des moyens de centrage complémentaire de l'outil de formage mâle, notamment un trou, servent à centrer longitudinalement l'ensemble sur le bossage.

En référence aux figures 15 et 16, un outil 104 de formage femelle, présentant une surface 141 correspondant à la forme de la surface 114 intérieure du raidisseur 101 à réaliser, munie d'une gorge 142 longitudinale de forme complémentaire de celle du bossage, est appliqué sur l'outil 105 de formage mâle, de manière à réaliser un ensemble 126a préformé.

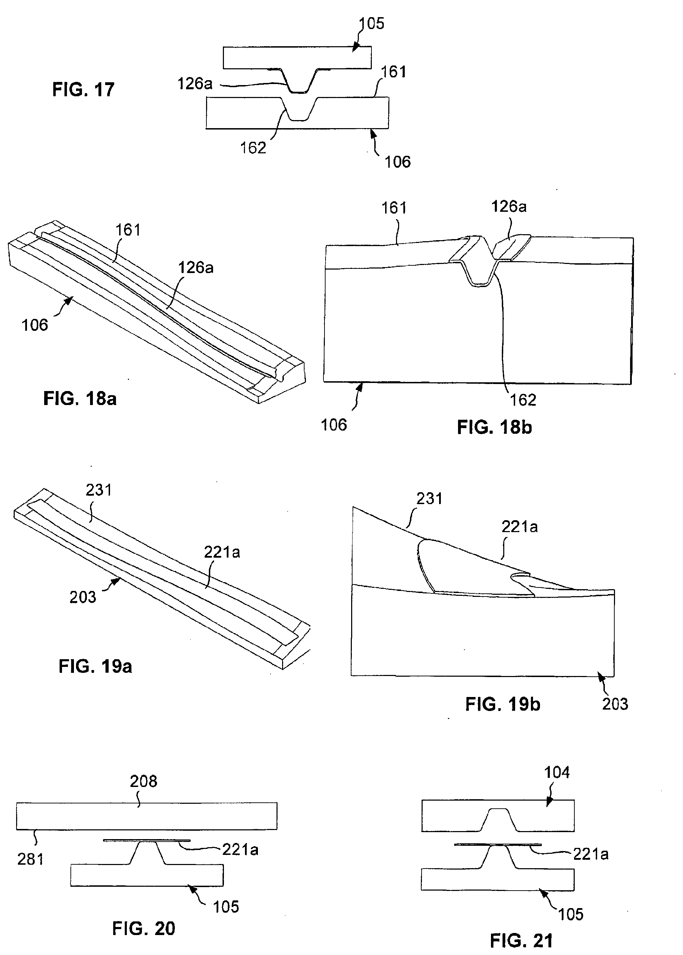

En référence aux figures 17, 18a et 18b, l'ensemble préformé est transféré via l'outil de formage mâle sur un outil 106 de moulage définitif. Cet outil de moulage définitif présente une surface 161 dont la forme correspond à la surface 113 extérieure au raidisseur 1 à réaliser, ladite surface présentant une gorge 162 longitudinale correspondant sensiblement à celle 142 de l'outil 104 de formage femelle. Un ou plusieurs autres ensembles préformés sont fabriqués selon le procédé décrit ci-dessus, et sont empilés au fur et à mesure de leur fabrication sur l'outil de moulage. Le raidisseur est ensuite compacté et durci comme décrit précédemment. Selon une variante de réalisation, l'ensemble 121a de plis est transféré directement depuis l'outil de drapage sur l'outil de formage femelle.

Les figures 19a à 21 illustrent des étapes d'un autre procédé de fabrication du raidisseur 101 des figures 11a et 11b.

En référence aux figures 19a et 19b, un ensemble 221 a de deux plis complémentaires est drapé sur la surface 231 d'application d'un outil 203 de drapage, ladite surface d'application correspondant sensiblement à la ligne directrice longitudinale du raidisseur à réaliser. Tel qu'illustré aux figures 20 et 21, l'ensemble 221a est transféré de l'outil de drapage sur l'outil de formage mâle 105 via un outil de transfert 208 présentant une surface 281, de forme complémentaire de celle de la surface de l'outil de drapage, et l'outil 104 de formage femelle est appliqué sur l'outil 105 de formage mâle pour réaliser un ensemble préformé qui est par la suite transféré comme précédemment sur un outil de moulage final.

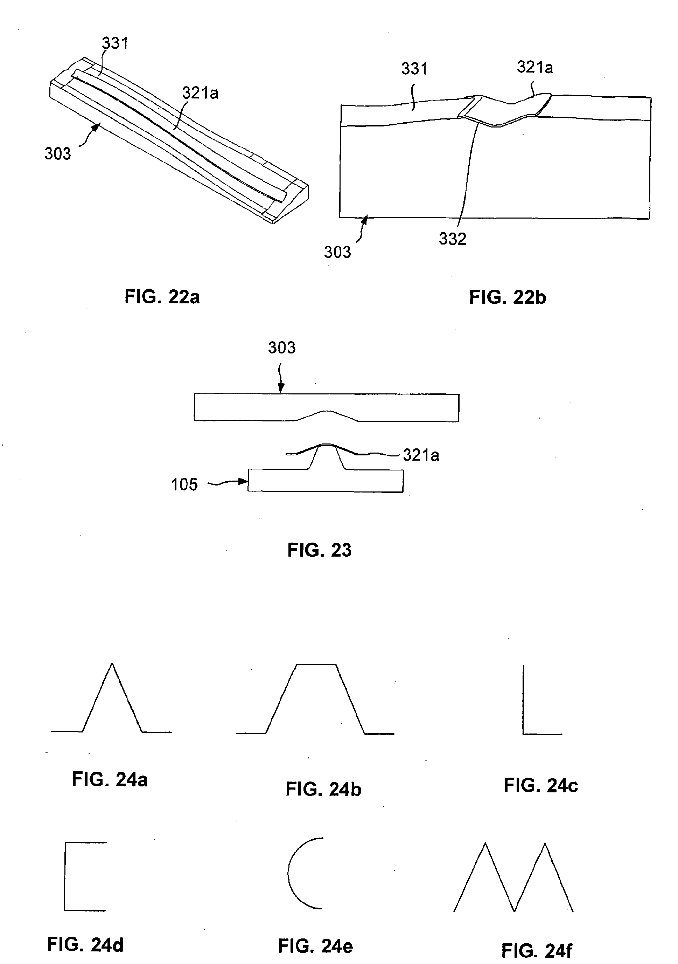

Les figures 22a, 22b et 23 illustrent des étapes d'un autre procédé de fabrication du raidisseur 101 des figures 11a et 11b.

En référence aux figures 22a et 22b, un ensemble 321a de deux plis complémentaires est drapé sur la surface 331 d'application d'un outil 303 de drapage, ladite surface d'application étant munie d'un renfoncement 332 longitudinal s'étendant longitudinalement selon une ligne directrice correspondant à la ligne directrice longitudinale du raidisseur à réaliser et ayant une forme transversale correspondant à une section aplatie ou écrasée de la section transversale du raidisseur à réaliser. Tel qu'illustré aux figures 20 et 21, l'ensemble 221a de plis est transféré de l'outil de drapage sur le bossage de l'outil 105 de formage mâle via l'outil de drapage, les étapes suivantes du procédé étant identiques à celles décrites précédemment.

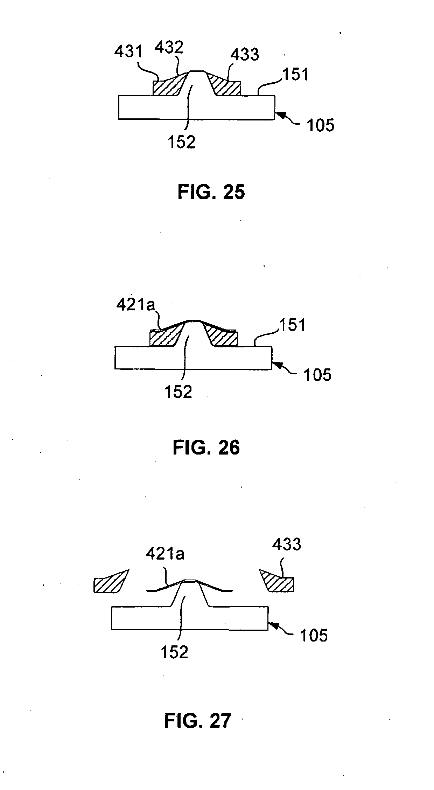

Les figures 25 à 27 illustrent des étapes d'un autre procédé de fabrication du raidisseur 101 des figures 11a et 11b. Dans ce mode de réalisation, en référence à la figure 25, l'outil de drapage comprend une surface 431 d'application munie d'un bossage 432 longitudinal aplati, qui est sensiblement identique à celle 131 de l'outil 103 de drapage de la figure 12b. L'outil de drapage est ici formé à partir de l'outil 105 de formage mâle de la figure 14, auquel deux cales 433 longitudinales ont été ajoutées. Les cales 433 sont disposées de part et d'autre du bossage 152 de l'outil 105 de formage mâle et forment avec ce dernier ladite surface 431 d'application avec un bossage 432 aplati. Un ensemble 421a de deux plis complémentaires est drapé sur cette surface 431 d'application, tel qu'illustré à la figure 26. Après drapage, les cales 433 sont retirées, tel qu'illustré à la figure 27. L'outil 104 de formage femelle peut alors être appliqué sur l'outil 105 de formage mâle pour réaliser un ensemble préformé, tel qu'illustré aux figures 15 et 16. Après transfert de l'ensemble préformé dans un outil de moulage final, tel qu'illustré à la figure 17, les cales sont repositionnées sur l'outil de formage mâle pour le drapage de l'ensemble de plis suivant.

Selon une variante de réalisation, l'outil de drapage comprend une surface d'application munie d'une gorge longitudinale de section aplatie, qui est sensiblement identique à celle de l'outil 303 de drapage de la figure 22b, l'outil de drapage étant formé à partir de l'outil 104 de formage femelle de la figure 15, auquel une cale est ajoutée. La cale est disposée dans la gorge 142 de l'outil 104 de fonnage femelle et forme avec ce dernier une surface d'application avec une gorge aplatie. Après drapage, la cale est retirée, éventuellement en soulevant partiellement l'ensemble de plis, puis l'outil de formage mâle est appliqué sur l'outil de formage femelle pour réaliser un ensemble préformé.

Des raidisseurs comprenant à la fois des plis complémentaires à 0° et 90° et des plis complémentaires à +45° et -45° peuvent être réalisés. De préférence, les ensembles de plis à +45° ou -45° sont réalisés selon le procédé décrit en référence aux figures 2b à 6, et les ensembles de plis à 0° ou 90° sont réalisés selon l'un des procédés décrits en référence aux figures 12a à 18b, 19a à 21, 22a à 23, ou 25 à 27.

Le procédé selon l'invention pennet la réalisation de raidisseurs de différentes sections transversales, pouvant rester constante ou varier le long de leur ligne directrice longitudinale, notamment de raidisseurs de section transversale
- en delta, tel que décrit précédemment, et tel qu'illustré à la figure 24a,
- en oméga, tel que décrit précédemment et tel qu'illustré à la figure 24b,
- en V ou L, tel qu'illustré à la figure 24c,
- en U, tel qu'illustré à la figure 24d,
- en C, tel qu'illustré à la figure 24e,
- ou en W, tel qu'illustré à la figure 24f.

Bien que l'invention ait été décrite en liaison avec différents modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Procédé de fabrication d'une pièce (1, 101) de renfort allongée, en particulier d'un raidisseur, formé de plusieurs plis (23, 24, 123, 124) de matériau composite, chaque pli étant formé d'une ou plusieurs bandes (25) jointives chacune formée d'une ou plusieurs fibres (F) plates, ladite pièce de renfort ayant une section transversale comprenant au moins deux portions (11, 12 ; 110, 111, 112) non coplanaires,
**caractérisé en ce qu'**il comprend
a) la réalisation d'un ensemble (21a, 121a, 221a, 321a, 421a) de plis par drapage d'au moins deux plis (23, 24, 123, 124) complémentaires sur la surface (31, 131, 231, 331, 431) d'application d'un outil (3 ; 103 ; 203 ; 303 ; 105, 433) de drapage,
et le positionnement dudit ensemble de plis sur un outil (3, 104) de formage femelle comprenant une gorge (32, 142) dont la forme transversale correspond sensiblement à la section transversale de la pièce de renfort à réaliser, ou un outil de formage (5, 105) mâle complémentaire, comprenant un bossage (52, 152) longitudinal dont la forme transversale correspond sensiblement à la section transversale de la pièce de renfort à réaliser,
b) le formage dudit ensemble de plis entre l'outil de formage mâle et l'outil de formage femelle, par rapprochement relatif des deux outils, pour obtenir un ensemble (26a, 126a) préformé, dont la section transversale correspond sensiblement à la section transversale de la pièce de renfort à réaliser,
c) le positionnement de l'ensemble (26a, 126a) préformé sur un outil (6, 106) de moulage définitif,
d) la réitération des étapes a), b) et c) jusqu'à réalisation du nombre de plis souhaité pour la pièce de renfort, chaque ensemble préformé réalisé à l'étape b) étant à l'étape c) empilé sur l'ensemble préformé précédent, et
e) le compactage des ensembles (26a, 26b ; 126a) préformés empilés sur l'outil de moulage définitif.

2. Procédé selon la revendication 1, **caractérisé en ce que** l'étape a) comprend le drapage de plis (23, 24) par une tête (9) de placement de fibres comprenant un rouleau (91) de compactage, ladite tête de placement de fibres étant apte à appliquer une bande (25) formée de plusieurs fibres plates, de type rubans.

3. Procédé selon la revendication 1 ou 2, **caractérisé en ce qu'**à l'étape a), les plis sont drapés sur un bossage (132 ; 432) longitudinal dit aplati de l'outil (103 ; 105, 433) de drapage ou dans une gorge (332) longitudinale dite aplatie de l'outil (303) de drapage, ledit bossage longitudinal aplati et ladite gorge longitudinale aplatie ayant une forme transversale correspondant à une section aplatie de la section transversale de la pièce de renfort à réaliser.

4. Procédé selon la revendication 3, **caractérisé en ce qu'**à l'étape a) les plis d'un ensemble de plis sont drapés sur un outil (103, 105) de drapage puis l'ensemble (121a, 321a) de plis est transféré sur l'outil (105) de formage mâle ou sur l'outil (104) de formage femelle.

5. Procédé selon la revendication 4, **caractérisé en ce qu'**à l'étape a) l'ensemble (321a) de plis est transféré sur l'outil (105) de formage mâle ou l'outil (104) de formage femelle via l'outil de drapage.

6. Procédé selon la revendication 5, **caractérisé en ce que** l'outil de drapage est formé
- de l'outil (105) de formage mâle équipé d'au moins une cale (433) longitudinale amovible, le bossage (152) longitudinal de l'outil de formage mâle formant avec ladite cale ledit bossage (432) longitudinal aplati, ou
- de l'outil (104) de formage femelle équipé d'au moins une cale longitudinale amovible, la gorge (142) longitudinale de l'outil de formage femelle formant avec ladite cale ladite gorge longitudinale aplatie,
et **en ce que** l'étape a) comprend le drapage des plis d'un ensemble (421a) de plis sur l'outil de formage mâle équipé d'au moins une cale ou sur l'outil de formage femelle équipé d'au moins une cale, puis le retrait de ladite cale.

7. Procédé selon la revendication 1 ou 2, **caractérisé en ce que** pour la fabrication d'un ensemble (26a) préformé, l'étape a) comprend le drapage des plis (23, 24) sensiblement à plat sur un outil (3) de drapage qui constitue un outil de formage femelle, les plis s'étendant au-dessus et de part et d'autre de la gorge (32) longitudinale.

8. Procédé selon l'une des revendications 1 à 7, **caractérisé en ce que** l'étape c) comprend le positionnement de l'ensemble (26a, 126a) préformé via l'outil (5, 105) de formage mâle sur l'outil (6, 106) de moulage final.

9. Procédé selon l'une des revendications 1 à 8, **caractérisé en ce que** l'étape e) de compactage est réalisé sous vide au moyen d'un sac à vide.

10. Procédé selon l'une des revendications 1 à 9, **caractérisé en ce qu'**il comprend en outre une étape f) de durcissement de la pièce de renfort à l'état cru, par passage dans un four.

11. Procédé selon l'une des revendications 1 à 10, **caractérisé en ce que** l'étape f) est précédée d'une étape de détourage de la pièce de renfort.

12. Procédé selon l'une des revendications 1 à 11, **caractérisé en ce que** ladite pièce (101) de renfort à réaliser présente au moins une double courbure, l'outil (103, 203, 303) de drapage ayant une surface (131, 231, 331) d'application correspondant à ladite double courbure.

13. Procédé selon l'une des revendications 1 à 12, **caractérisé en ce que** ladite pièce à réaliser est un raidisseur de section transversale en oméga, en delta, en C, en U, en V, en W, en S, en Z ou en L.

## Patentansprüche

1. Verfahren zur Herstellung eines verlängerten Verstärkungselements (1, 101) insbesondere eines Versteifungsteils, das aus mehreren Lagen (23, 24, 123, 124) aus Verbundmaterial gebildet ist, wobei jede Lage aus einem oder mehreren zusammengefügten Bändern (25) gebildet ist, von denen jedes aus einer oder mehreren fachen Fasern (F) gebildet ist, wobei das Verstärkungselement einen Querschnitt aufweist, der mindestens zwei nicht koplanare Abschnitte (11, 12; 110, 111, 112) umfasst,
**dadurch gekennzeichnet, dass** es Folgendes umfasst
a) die Durchführung einer Einheit (21 a, 121 a, 221 a, 321 a, 421 a) von Lagen durch die Aufschrumpfung von mindestens zwei komplementären Lagen (23, 24, 123, 124) auf die Auftragsfläche (31, 131, 231, 331, 431) eines Aufschrumpfungswerkzeugs (3; 103; 203; 303; 105,433),
und die Positionierung der Einheit von Lagen auf einem Innen-Formwerkzeug (3, 104), umfassend eine Auskehlung (32, 142), deren Querform im Wesentlichen dem Querschnitt des durchzuführenden Verstärkungselements entspricht, oder einem komplementären Außen-Formwerkzeug (5, 105), das eine längliche Erhebung (52, 152) umfasst, deren Querform im Wesentlichen dem Querschnitt des durchzuführenden Verstärkungselements entspricht,
b) die Bildung der Einheit von Lagen zwischen dem Außen-Formwerkzeug und dem Innen-Formwerkzeug durch die relative Annäherung der zwei Werkzeuge um eine vorgeformte Einheit (26a, 126a) zu erhalten, deren Querschnitt im Wesentlichen dem Querschnitt des durchzuführenden Verstärkungselements entspricht,
c) die Positionierung der vorgeformten Einheit (26a, 126a) auf einem definitiven Formwerkzeug (6, 106)
d) die Wiederholung der Schritte a), b) und c) bis zur Durchführung der gewünschten Anzahl von Lagen für das Verstärkungselement, wobei jede vorgeformte Einheit, die in Schritt b) durchgeführt wird, in Schritt c) auf der vorhergehenden vorgeformten Einheit gestapelt wird, und
e) die Kompaktierung der vorgeformten Einheiten (26a, 26b ; 126a), die auf dem definitiven Formwerkzeug gestapelt sind.

2. Verfahren nach Anspruch 1, **dadurch gekennzeichnet, dass** der Schritt a) das Aufschrumpfen von Lagen (23, 24) durch einen Kopf (9) zur Anbringung von Fasern umfasst, der eine Kompaktierungsrolle (91) umfasst, wobei der Kopf zur Anbringung von Fasern dazu in der Lage ist, ein Band (25) aufzubringen, das aus mehreren flachen Fasern, vom Typ Bänder, gebildet ist

3. Verfahren nach Anspruch 1 oder 2, **dadurch gekennzeichnet, dass** in Schritt a) die Lagen auf einer länglichen Erhebung (132, 432), genannt abgeplattet, des Aufschrumpfungswerkzeugs (103, 105, 433) aufgeschrumpft sind, oder in einer länglichen Auskehlung (332), genannt abgeplattet, des Aufschrumpfungswerkzeugs (303), wobei die abgeplattete längliche Erhebung und die abgeplattete längliche Auskehlung eine Querform aufweisen, die einem abgeplatteten Abschnitt des Querschnitts des durchzuführenden Verstärkungselements entspricht.

4. Verfahren nach Anspruch 3, **dadurch gekennzeichnet, dass** in Schritt a) die Lagen einer Einheit von Lagen auf ein Aufschrumpfungswerkzeug (103, 105) aufgeschrumpft werden, dann die Einheit (121a, 321a) von Lagen auf das Außen-Formwerkzeug (105) oder auf das Innen-Formwerkzeug (104) übertragen wird.

5. Verfahren nach Anspruch 4, **dadurch gekennzeichnet, dass** in Schritt a) die Einheit (321 a) von Lagen auf das Außen-Formwerkzeug (105) oder auf das Innen-Formwerkzeug (104) mit Hilfe des Aufschrumpfungswerkzeugs übertragen wird.

6. Verfahren nach Anspruch 5, **dadurch gekennzeichnet, dass** das Aufschrumpfungswerkzeug aus Folgendem gebildet ist:
- dem Außen-Formwerkzeug (105), das mit mindestens einem abnehmbaren länglichen Keil (433) ausgestattet ist, wobei die längliche Erhebung (152) des Außen-Formwerkzeugs, mit dem Keil die abgeplattete längliche Erhebung (432) bildet, oder
- dem Innen-Formwerkzeug (104), ausgestattet mit mindestens einem abnehmbaren länglichen Keil, wobei die längliche Auskehlung (142) des Innen-Formwerkzeugs mit dem Keil die abgeplattete längliche Auskehlung bildet,
und dadurch, dass der Schritt a) das Aufschrumpfen der Lageneiner Einheit (421 a) von Lagen auf das Außen-Formwerkzeug, ausgestattet mit mindestens einem Keil oder auf das Innen-Formwerkzeug, ausgestattet mit mindestens einem Keil, dann das Rückziehen des Keils umfasst.

7. Verfahren nach Anspruch 1 oder 2, **dadurch gekennzeichnet, dass** für die Herstellung einer vorgeformten (26a) Einheit der Schritt a) das Aufschrumpfen der Lagen (23, 24) im Wesentlichen platt auf ein Aufschrumpfungswerkzeug (3) umfasst, das ein Innen-Formwerkzeug darstellt, wobei sich die Lagen über die längliche Auskehlung (32) hinaus und auf beiden Seiten dieser erstrecken.

8. Verfahren nach einem der Ansprüche 1 bis 7, **dadurch gekennzeichnet, dass** der Schritt c) die Positionierung der vorgeformten Einheit (26a, 126a) mit Hilfe des Außen-Formwerkzeugs (5, 105) auf dem endgültigen Formwerkzeug (6, 106) umfasst.

9. Verfahren nach einem der Ansprüche 1 bis 8, **dadurch gekennzeichnet, dass** der Kompaktierungsschritt e) unter Vakuum mit Hilfe eines Vakuumbeutels erfolgt.

10. Verfahren nach einem der Ansprüche 1 bis 9, **dadurch gekennzeichnet, dass** es außerdem einen Schritt f) des Härtens des Verstärkungselements im rohen Zustand durch den Durchlauf durch einen Ofen umfasst.

11. Verfahren nach einem der Ansprüche 1 bis 10, **dadurch gekennzeichnet, dass** vor dem Schritt f) ein Schritt des Ablenkens des Verstärkungselements erfolgt.

12. Verfahren nach einem der Ansprüche 1 bis 11, **dadurch gekennzeichnet, dass** das durchzuführende Verstärkungselement (101) mindestens eine doppelte Krümmung aufweist, wobei das Aufschrumpfungswerkzeug (103, 203, 303) eine Auftragsfläche (131, 231, 331) umfasst, die der doppelten Krümmung entspricht.

13. Verfahren nach einem der Ansprüche 1 bis 12, **dadurch gekennzeichnet, dass** das durchzuführende Verstärkungselement ein Versteifungsteil mit einem Omega-, Delta-, C-, U-, V-, W-, S-, Z-oder L-Querschnitt ist.

## Claims

1. Method for manufacturing an elongate reinforcement part (1, 101), in particular of a stiffener, formed of several plies (23, 24, 123, 124) of composite material, with each ply being formed of one or several abutting strips (25) each formed of one or several flat fibres (F), said reinforcement part having a transverse cross-section comprising at least two non-coplanar portions (11, 12; 110, 111, 112),
**characterised in that** it comprises
a) producing an assembly (21a, 121a, 221a, 321 a, 421a) of plies by layup of at least two complementary plies (23, 24, 123, 124) on the application surface (31, 131, 231, 331, 431) of a layup tool (3; 103; 203; 303; 105, 433),
and positioning of said assembly of plies on a female forming tool (3, 104) comprising a groove (32, 142) of which the transverse shape substantially corresponds to the transverse cross-section of the reinforcement part to be produced, or a complementary male forming tool (5, 105), comprising a longitudinal boss (52, 152) of which the traverse shape substantially corresponds to the traverse cross-section of the reinforcement part to be produced,
b) forming of said assembly of plies between the male forming tool and the female forming tool, by the relative coming closer together of the two tools, in order to obtain a preformed assembly (26a, 126a), of which the transverse cross-section substantially corresponds to the transverse cross-section of the reinforcement part to be produced,
c) positioning of the preformed assembly (26a, 126a) on a final moulding tool (6, 106),
d) repeating of steps a), b) and c) until the desired number of plies for the reinforcement part has been produced, each preformed assembly produced in the step b) being in the step c) stacked on the preceding preformed assembly, and
e) compacting of the preformed assemblies (26a, 26b; 126a) stacked on the final moulding tool.

2. Method according to claim 1, **characterised in that** the step a) comprises the layup of plies (23, 24) by a fibre placement head (9) comprising a compaction roller (91), said fibre placement head being able to apply a strip (25) formed of several flat fibres, of the ribbon type.

3. Method according to claim 1 or 2, **characterised in that** in step a), the plies are draped on a so-called flattened longitudinal boss (132; 432) of the layup tool (103; 105, 433) or in a so-called flattened longitudinal groove (332) of the layup tool (303), said flattened boss longitudinal and said flattened longitudinal groove having a transverse shape corresponding to a flattened cross-section of the transverse cross-section of the reinforcement part to be produced.

4. Method according to claim 3, **characterised in that** in step a) the plies of an assembly of plies are drape-moulded on a layup tool (103, 105) then the assembly (121a, 321a) of plies is transferred on the male forming tool (105) or on the female forming tool (104).

5. Method according to claim 4, **characterised in that** in step a) the assembly (321 a) of plies is transferred on the male forming tool (105) or the female forming tool (104) via the layup tool.

6. Method according to claim 5, **characterised in that** the layup tool is formed
- of the male forming tool (105) provided with at least one removable longitudinal wedge (433), with the longitudinal boss (152) of the male forming tool forming with said wedge said flattened longitudinal boss (432), or
- of the female forming tool (104) provided with at least one removable longitudinal wedge, with the longitudinal groove (142) of the female forming tool forming with said wedge said flattened longitudinal groove,
and **in that** the step a) comprises the layup of the plies of an assembly (421a) of plies on the male forming tool provided with at least one wedge or on the female forming tool provided with at least one wedge, then the removing of said wedge.

7. Method according to claim 1 or 2, **characterised in that** for the manufacturing of an preformed assembly (26a), the step a) comprises the layup of plies (23, 24) substantially flat on a layup tool (3) which constitutes a female forming tool, with the plies extending above and on either side of the longitudinal groove (32).

8. Method according to one of claims 1 to 7, **characterised in that** the step c) comprises the positioning of the preformed assembly (26a, 126a) via the male forming tool (5, 105) on the final moulding tool (6, 106).

9. Method according to one of claims 1 to 8, **characterised in that** the step e) of compacting is carried out in a vacuum by means of a vacuum bag.

10. Method according to one of claims 1 to 9, **characterised in that** it further comprises a step f) of hardening of the reinforcement part in the raw state, by passage in an oven.

11. Method according to one of claims 1 to 10, **characterised in that** the step f) is preceded by a step of trimming of the reinforcement part.

12. Method according to one of claims 1 to 11, **characterised in that** said reinforcement part (101) to be produced has at least one double curvature, with the layup tool (103, 203, 303) having an application surface (131, 231, 331) corresponding to said double curvature.

13. Method according to one of claims 1 to 12, **characterised in that** said part to be produced is a stiffener of transverse cross-section in omega, in delta, in C, in U, in V, in W, in S, in Z or in L.
